# EUROPEAN PATENT SPECIFICATION

(11) **EP 0 454 031 B1**
(45) Date of publication and mention of the grant of the patent: **16.02.1994**
(21) Application number: 91106448.3
(22) Date of filing: 22.04.1991
(51) Int. Cl.: F02B 23/06, F02B 23/04, F02F 3/26

(54) **Construction of a combustion chamber for an internal combustion engine**
Konstruktion einer Brennkammer für eine Brennkraftmaschine
Construction d'une chambre de combustion pour un moteur à combustion interne

(30) Priority: 23.04.1990 JP 107052/90
(43) Date of publication of application: 30.10.1991
(73) Proprietor: Isuzu Motors Limited, Shinagawa-ku, Tokyo 140 (JP)
(72) Inventor: Horiuchi, Shigeaki, Kanagawa-ken (JP)
(74) Representative: Goddar, Heinz J., Dr.

(56) References cited:
- DE-C- 736 047
- NL-C- 16 188
- US-A- 3 132 633
- US-A- 3 923 032

## Description

The present invention relates to a combustion chamber for an internal combustion engine in which fuel is effectively mixed with respect to an intake swirl in a direct fuel injection type Diesel engine to activate the combustion state at the latter period of combustion.

NL-A-16188 discloses a depressed combustion chamber in a piston crown with a substantially conical projecting wall member which projects upwardly from the center of a bottom wall of the depressed combustion chamber, wherein a jet fuel inlet extends downwardly from an upper end of the projecting wall member, said jet fuel inlet being communicated with a sub-chamber disposed below the bottom wall of the combustion chamber and a plurality of combustion gas jetports open from the sub-chamber toward the peripheral edge of the bottom wall of the combustion chamber are provided.

It is an object of the invention to provide a combustion chamber for an internal combustion engine which can disturb the motion of combustion gases or flame during combustion to thereby promptly separate fuel adhered to the peripheral wall from the peripheral wall to promote the combustion of fuel.

For achieving the aforesaid object, the present invention provides an arrangement with the features of the only claim.

According to the present invention, fuel is jetted from an inlet of the center on the upper side of the combustion chamber to the sub-chamber on the lower side of the combustion chamber, slightly later than a main jet at the latter period of combustion, combustion gases in the sub-chamber are blown from the jet ports along the surface of the bottom wall and peripheral wall of the combustion chamber to produce turbulence in the combustion gases, and at the same time, fuel adhered to the peripheral wall is rapidly separated to activate the combustion.

The direction of the jet flow of combustion gases is reversed to the intake swirl to thereby produce turbulence of a flow of combustion gases in the combustion chamber to further activate the combustion.
Fig. 1 is a front sectional view showing a connecting construction between a piston and a connecting rod which is advantageous for a combustion chamber to which the present invention is applied;
Fig. 2 is a front sectional view showing the combustion chamber;
Fig. 3 is a plan view showing the same;
Fig. 4 to 7 are respectively front sectional views showing a construction of a combustion chamber according to a modified embodiment of the present invention; and
Fig. 8 is a front sectional view showing a construction of a combustion chamber in which the present invention is applied to a conventional general piston.

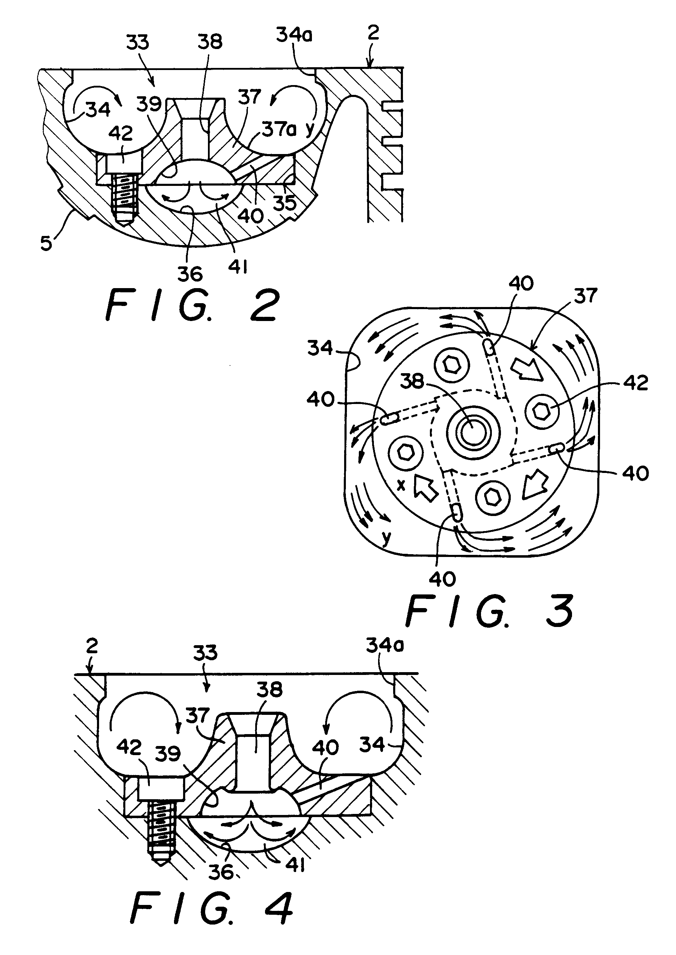

Fig. 1 is a front sectional view showing a connecting construction between a connecting rod and a piston which is suitable for applying the present invention. In a piston 2 shown as an example of a Diesel engine, a combustion chamber 33 is formed by a cavity or depression provided on a crown surface 2a of the piston whereas well known piston rings are mounted in the outer peripheral wall and the interior of a skirt portion 7 is made to be hollow, similarly to prior art.

The crown portion of the piston 2 is formed in its back surface with a convex portion 4 provided with a downwardly projecting spherical surface 5. The periphery of the convex portion 4 is defined by an annular space 6, and the annular space 6 is filled with lubricating oil for cooling. The lubricating oil is supplied from an external source. The spherical surface 5 of the convex portion 4 is provided with a depression 5a for retaining oil for cooling and lubrication. A bowl-shape receiving plate 12 is formed integral with the extreme end of a connecting rod 13. A concave portion 12a which forms a spherical surface on the receiving plate 12 is slidably engaged with the spherical surface 5.

An annular keep member 8 having a concave portion 8a in the form of a spherical surface is placed in contact with the back surface of the receiving plate 12 in order to maintain the engagement between the convex portion 4 and the receiving plate 12. The keep member 8 is supported by a tubular nut 9 threadedly engaged with the skirt portion 7. The nut 9 is prevented from being loosened by a stop ring 10 engaged with the skirt portion 7.

An axial portion at the extreme end of an arm of a crank shaft 16 (represented by an axial center) is connected between a semicircular depression 14a at the base end 14 of the connecting rod 13 and a semicircular depression 15a of a bearing cap 15. The base end 14 of the connecting rod 13 is configured similar to that of prior art. The receiving plate 12 at the extreme end of the connecting rod 13 supports the convex portion 4 of the crown portion and oscillates as the crank shaft 16 rotates.

According to the above-described construction, the concave portion 12a of the receiving plate 12 of the connecting rod 13 is engaged with the convex portion 4 of the crown portion so that the concave portion 12a may be oscillated. Therefore, as compared with the conventional pin connecting construction, the center a of oscillation of the connecting rod 13 is considerably close to the crown surface 2a, and in addition, a sufficiently deep combustion chamber 33 can be disposed in the crown portion of the piston 2. Furthermore, a dimension p between the center a of oscillation and the crown surface 2a is reduced so that when an arm (length r) of the crank shaft 16 is extended through that reduced amount, the stroke of the piston 2 is increased, and displacement can be increased without changing a height h of a cylinder body.

Alternatively, the axial portion (a convex portion having a semicircular section) of the piston may be supported by a semi-cylindrical depression (a groove having a semicircular section parallel with the crank shaft) provided in place of the spherical concave portion in the receiving plate at the extreme end of the connecting rod.

Fig. 2 is a front sectional view of a piston provided with a combustion chamber according to the present invention, and Fig. 3 is a plan view of the same. A combustion chamber 33 defined by a peripheral wall 34 is formed in the crown portion of the piston 2, and an open edge portion 34a of the combustion chamber 33 is projected slightly toward the center of the combustion chamber 33 to narrow the combustion chamber 33. The combustion chamber 33 is formed in its bottom with a shallow cylindrical portion 35 which is in turn formed in the center of bottom wall thereof with a bowl-shaped concave portion 36. A projecting wall member 37 having a conical portion projected upwardly from the center of a base disk is fitted in the cylindrical portion 35 and is secured to the crown portion by means of a plurality of bolts 42.

The projecting wall member 37 is formed in its bottom with a dome-shaped concave portion 39 and a sub-chamber 41 is formed by the aforementioned concave portion 36 and a concave portion 39. The sub-chamber 41 is opened to the center portion of the combustion chamber 33 by an inlet 38 provided in the center of the projecting wall member 37 to introduce vertical jet fuel. The sub-chamber 41 is obliquely opened to the bottom wall of the combustion chamber 33 via jet ports 40, more specifically, a bottom wall 37a of the projecting wall member 37 is so shaped that combustion gases are blown out along the surface of the peripheral wall 34.

Next, the operation of the combustion chamber in the internal combustion engine according to the present invention will be described. Fuel is jetted from a plurality of jets of a fuel injection nozzle disposed in the center on the upper side of the piston 2 toward the peripheral wall 34 of the combustion chamber 33 (refer Figs. 9 and 10). Preferably, little later, fuel from the fuel injection nozzle is jetted into the sub-chamber 41 via an inlet 38 of the projecting wall member 37.

A part of fuel jetted from the fuel injection nozzle to the peripheral wall 34 is mixed, before reaching the peripheral wall 34, with air of intake swirl in the combustion chamber 33 so that the fuel is fired and burnt. The remaining fuel is adherred to the peripheral wall 34.

On the other hand, fuel jetted from the fuel injection nozzle to the sub-chamber 41 via the inlet 38 flows along the surface of the peripheral wall 34 from the jet ports 40 while being burnt in the sub-chamber 41 and whirls along the peripheral wall 34 as indicated by an arrow y (in the direction opposite to the intake swirl x) as a whole. The fuel adherred to the peripheral wall 34 is rapidly separated by the combustion gases which flow along the surface of the peripheral wall 34 from the sub-chamber 41, the gases being mixed with air and burnt. In this way, fuel adherred to the peripheral wall 34 and incompletely burnt in the past, is separated from the peripheral wall 34 and burns now. Therefore, the combustion state at the latter period of combustion becomes active as compared with the prior art to reduce the smoke or black smoke in the exhaust gases.

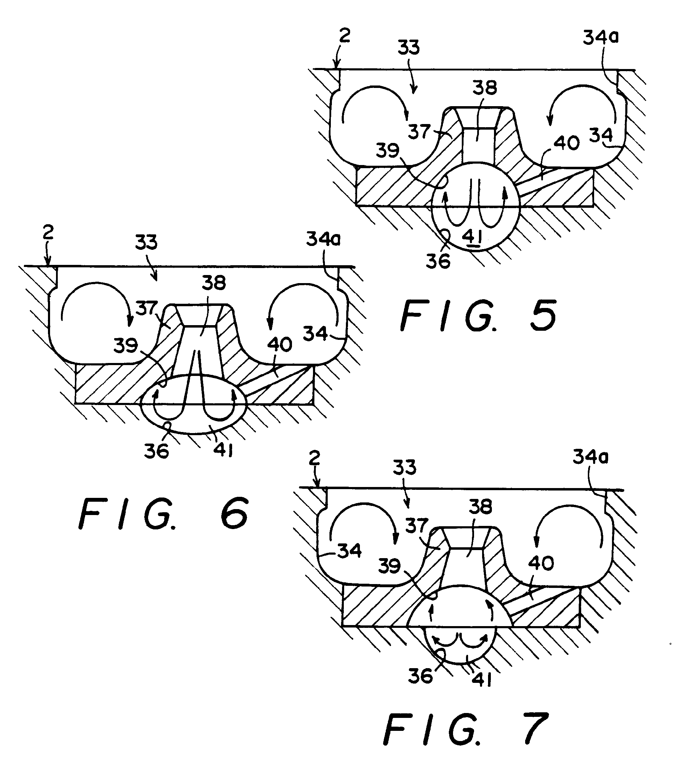

As shown in Figs. 5 and 6, the shape of the sub-chamber 41 may be of spherical shape or an oval section. In order to increase the volume of the sub-chamber 41, the inside diameter of the concave portion 36 of the crown portion may be made larger than that of the concave portion 39 of the projecting wall member 37 as shown in Fig. 2, or the inside diameter of the concave portion 36 of the crown portion may be made smaller than that of the concave portion 39 of the projecting wall member 37 in case the crown portion has not enough wall thickness as shown in Fig. 7. In this case, fuel and air in the sub-chamber 41 are effectively stirred due to the presence of a difference in level of a connecting portion between the concave portion 36 and the concave portion 39.

The inlet 38 has a shape such that the wall portion at the inner end of the inlet 38 is extended into the concave portion 39, as shown in Fig. 4, and an area of a passage of the inlet 38 is enlarged in a tapered fashion as the inlet 38 comes close to the sub-chamber 41, as shown in Figs. 6 and 7. With this, fuel and air can be well mixed even in the relatively flat sub-chamber 41.

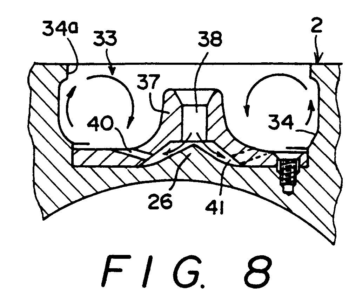

While in the foregoing, a description has been made in the case of a piston having a connecting construction with a connecting rod shown in Fig. 1, it is to be noted that also in the case of a conventional piston connected to a connecting rod by means of a piston pin, as shown in Fig. 8, the projecting wall member 37 is disposed on the bottom having the conical projecting portion 26 in the combustion hamber 33 to form the flat sub-chamber 41 so that fuel is jetted into the inlet 38 in the center of the projecting wall member 37. With this, fuel is fired in the sub-chamber 41 so that the combustion gases flow along the surface of the peripheral wall of the combustion chamber 33 via the jet ports 40 from the sub-chamber 41. Therefore, fuel adherred to the peripheral wall is separated and burnt.

## Claims

1. A depressed combustion chamber on the flat crown surface (2a) of a piston (2), for an internal combustion engine, the combustion chamber (33, 41) comprising a main combustion chamber (33) with a bottom wall (37a), said main combustion chamber (33) comprising the greater part of the combustion space and a sub-chamber (41); the combustion chamber (33) further comprising a substantially conical projecting wall member (37) which projects upwardly from the center of the bottom wall of the main combustion chamber (33) and a jet fuel inlet (38) extending downwardly from an upper end of the projecting wall member (37), said jet fuel inlet (38) being communicated with the sub-chamber (41) disposed below the bottom wall of the combustion chamber, and a plurality of combustion gas jet ports (40) which are open from the sub-chamber (41) toward the peripheral edge of the bottom wall (37a) of the combustion chamber (33, 41).

## Patentansprüche

1. Vertiefte Verbrennungskammer in der ebenen Deckfläche (2a) eines Kolbens (2) für eine Brennkraftmaschine, wobei die Verbrennungskammer (33, 41) eine Hauptverbrennungskammer (33) mit einer Bodenwand (37a) umfaßt, welche Hauptverbrennungskammer (33) den größeren Teil des Verbrennungsraums und eine Unterkammer (41) umfaßt; die Verbrennungskammer (33) umfaßt weiter ein im wesentlichen konisch vorstehendes Wandteil (37), das vom Mittelpunkt der Bodenwand der Hauptverbrennungskammer (33) nach oben vorsteht, und einen Brennstoffstrahleinlaß (38), der sich von einem oberen Ende des vorstehenden Wandteils (37) nach unten erstreckt, wobei der Brennstoffstrahleinlaß (38) mit der unter der Bodenwand der Verbrennungskammer angeordneten Unterkammer (41) in Verbindung steht, und eine Anzahl von Verbrennungsgasstrahlöffnungen (40), die von der Unterkammer (41) in Richtung auf den äußeren Rand der Bodenwand (37a) der Verbrennungskammer (33, 41) münden.

## Revendications

1. Chambre de combustion en cavité sur la surface supérieure plane (2a) d'un piston (2), pour moteur à combustion interne, la chambre de combustion (33, 41) comprenant une chambre de combustion principale (3) pourvue d'une paroi inférieure (37a), ladite chambre de combustion (33) comprenant la plus grande partie de l'espace de combustion et une sous-chambre (41); la chambre de combustion (33) comprenant en outre une paroi saillante (37) sensiblement conique, qui fait saillie vers le haut depuis le centre de la paroi inférieure de la chambre de combustion principale (3) et une entrée de jet de carburant (38) s'étendant vers le bas depuis une extrémité supérieure de la paroi saillante (37), ladite entrée de jet de carburant (38) étant mise en communication avec la sous-chambre (41) disposée au-dessous de la paroi inférieure de la chambre de combustion et une pluralité d'orifices de jet de gaz de combustion (40), qui sont ouverts depuis la sous-chambre (41) vers le bord périphérique de la paroi inférieure (37a) de la chambre de combustion (33, 41).
